# EUROPÄISCHE PATENTSCHRIFT

(11) **EP 2 897 507 B1**
(45) Veröffentlichungstag und Bekanntmachung des Hinweises auf die Patenterteilung: **14.12.2016**
(21) Anmeldenummer: 13795424.4
(22) Anmeldetag: 23.09.2013
(51) Int. Cl.: A47J 31/44

(54) **VORRICHTUNG ZUR HERSTELLUNG VON WARMEM ODER KALTEM MILCHSCHAUM**
DEVICE FOR PREPARING HOT OR COLD MILK FROTH
DISPOSITIF POUR PRÉPARER UNE MOUSSE DE LAIT FROIDE OU CHAUDE

(30) Priorität: 21.09.2012 DE 202012009074 U
(43) Veröffentlichungstag der Anmeldung: 29.07.2015
(73) Patentinhaber: Eugster/Frismag AG, 8580 Amriswil (CH)
(72) Erfinder: STUTZ, Dieter, CH-9565 Bussnang (CH)
(74) Vertreter: Schubert, Siegmar
(86) Internationale Anmeldenummer: PCT/EP2013/002856
(87) Internationale Veröffentlichungsnummer: WO 2014/044407

(56) Entgegenhaltungen:
- EP-A1- 2 294 952
- EP-A1- 2 298 142
- WO-A1-2005/013781
- WO-A1-2008/083941
- WO-A1-2011/105942
- DE-A1-102008 021 777
- US-A- 6 099 878

## Beschreibung

Die Erfindung betrifft eine Vorrichtung zur Bereitung von wahlweise kaltem oder warmem Milchschaum oder Abgabe wahlweise kalter oder warmer Milch nach dem Oberbegriff des Anspruchs 1.

Stand der Technik Dokumente sind WO 2008/083941, EP 2 298 142, DE 10 2008 021777, US 6 099 878.

Nach dem Stand der Technik sind Kaffeezubereitungsgeräte, insbesondere Espressomaschinen, häufig mit Milchschaumzubereitungsvorrichtungen ausgestattet, die als wesentlichen Bestandteil eine Schäumvorrichtung mit einem als Venturidüse ausgebildeten Strömungsweg umfasst. Der Strömungsweg steht mit einer Milchleitung in Verbindung, in die zur Milchschaumbereitung eine Luftansaugleitung oder -öffnung münden kann. Zur Milchschaumbereitung wird dem als Venturidüse ausgebildeten Strömungsweg der Schäumvorrichtung aus einem Dampfgenerator des Kaffeezubereitungsgeräts Dampf zugeleitet, durch dessen Strömung in dem Strömungsweg ein Unterdruck erzeugt wird, der über die Milchleitung Milch aus einem Milchbehälter und über die Luftzuführung Luft ansaugt. Demzufolge werden in dem Strömungsweg Dampf, Milch und Luft vermischt und zu warmem Milchschaum aufgeschäumt. Durch Absperren der Luftzufuhr unterbleibt eine Schaumerzeugung in dem Strömungsweg der Schäumvorrichtung und es wird nur heiße Milch bereitet.

In jüngerer Zeit wird von Vorrichtungen zur Bereitung von Milchschaum nicht nur die Möglichkeit einer Erzeugung von warmem Milchschaum gefordert, sondern auch die einer Abgabe von kaltem Milchschaum. Hierzu wird kalte Milch mittels einer Förderpumpe aus einem Vorratsbehälter in eine Schäumeinheit gepumpt und die die Schäumung hervorrufende Luft entweder über eine in eine Milchleitung mündende Luftzuführleitung, in der durch die Strömungsgeschwindigkeit der Milch ein Unterdruck entsteht, angesaugt oder die Luft wird der Milch durch einen von einer Pumpe erzeugten Überdruck über eine Luftleitung zugeführt. Eine Vermischung der Milch mit der Luft kann dabei bereits in der Milchleitung oder erst in einer Milchschäumvorrichtung erfolgen.

Weiterhin ist es bekannt, in derselben Milchschaumbereitungsvorrichtung wahlweise Warmschaum oder Kaltschaum zu erzeugen. Zur Erzeugung von warmem Milchschaum oder auch nur warmer Milch kann die mittels der Pumpe geförderte Milch bzw. das der Schäumvorrichtung zugeführte Milch-Luftgemisch vor oder in der Schäumvorrichtung durch einen Wärmetauscher geführt werden.

Mit einer solchen bekannten Vorrichtung zur Erzeugung von Milchschaum oder Milchgetränken, in der Milch mittels einer Pumpe aus einem Behälter angesaugt und zu einem Auslass gefördert wird, wobei der Milch Luft beigemischt werden kann und das dadurch entstehende Milch-Luftgemisch im kaltem oder heißem Zustand durch eine Drosselstelle zu Milchschaum verarbeitet werden kann, ist vorgesehen, das Milch-Luftgemisch wahlweise direkt oder über einen Durchlauferhitzer zum Auslass zu fördern (WO 2008/083941 A1). Im Einzelnen weist hierzu eine Auslassleitung, die stromabwärts der Pumpe angeordnet ist, zwei zwischen der Drosselstelle und dem Auslass angeordnete, über ein Ventil wahlweise einschaltbare Parallelabschnitte auf, wobei nur einem dieser Parallelabschnitte der Durchlauferhitzer zugeordnet ist. Damit kann kalter oder heißer Milchschaum zum Auslass gefördert werden. Diese Vorrichtung zur Erzeugung von Milchschaum oder Milchgetränken kann als selbstständiges Gerät ausgebildet sein oder als ein Bestandteil einer Kaffeemaschine.

Der vorliegenden Erfindung liegt die Aufgabe zugrunde, eine kompakte effiziente Vorrichtung zur wahlweisen Bereitung von kaltem oder warmem Milchschaum oder Abgabe kalter oder warmer Milch zu schaffen, die sich durch geringeren Aufwand auszeichnet.

Diese Aufgabe wird mit einer Vorrichtung der eingangs genannten Gattung mit den in Anspruch 1 angegebenen Merkmalen gelöst.

Demgemäß geht die Erfindung aus von einer Vorrichtung zur Bereitung von wahlweise kaltem oder warmem Milchschaum oder Abgabe wahlweise kalter oder warmer Milch, die einen Milchbehälter, einen Milcheinlass, welcher den Milchbehälter über einen Milchventilweg mit einer über einen Luftventilweg aktivierbaren Kaltschäumvorrichtung verbindet, eine stromabwärts der Schäumvorrichtung angeordnete Auslassleitung mit einem Auslass sowie Mittel zum Erwärmen des in der Schäumvorrichtung bereiteten Milchschaums bzw. der die Kaltschäumvorrichtung durchströmenden Milch umfasst. Die Kaltschäumvorrichtung kann insbesondere eine Drosselstrecke bzw. Drossel aufweisen, die von der Milch durchströmt wird, die zur Schaumbereitung mit Luft durchsetzt ist. Die Schaumerzeugung kann bereits stromabwärts der Verbindung des Milchventilwegs mit dem Luftventilweg beginnen. Zum Transport der Milch durch den Milcheinlass, den Milchventilweg und die Kaltschäumvorrichtung kann eine Pumpe, insbesondere eine Saugpumpe, vorgesehen sein.

Der Auslass an der Auslassleitung der Vorrichtung umfasst als Mittel zum optionalen Erwärmen des in der Kaltschäumvorrichtung der Vorrichtung bereiteten Milchschaums bzw. der sie durchströmenden Milch eine Dampfheizeinrichtung mit einer Dampfgeneratorkoppelvorrichtung in einer solchen Ausbildung, dass der Auslass mit diesen geeignet ist, Milchschaum bzw. Milch zu erwärmen, wenn in die Dampfgeneratorkoppelvorrichtung Dampf von einem externen Dampfgenerator bzw. einer Dampfauslassleitung des Dampfgenerators eingespeist wird.

Ohne Anschluss der Dampfgeneratorkoppelvorrichtung an einen externen Dampfgenerator kann die Vorrichtung kalten Milchschaum bereiten bzw. kalte Milch abgeben. Die Vorrichtung kann hierzu als selbstständig nutzbares einfaches Aggregat verwendet werden. Zum Betrieb der Vorrichtung als eigenständiges Gerät im ungekoppelten Zustand, in dem von diesem kalter Milchschaum oder kalte Milch abgegeben werden kann, ist die Dampfgeneratorkoppelvorrichtung absperrbar, und zwar besonders zweckmäßig nach Anspruch 9 selbsttätig absperrbar, wenn die Dampfgeneratorkoppelvorrichtung von einem externen Dampfgenerator oder dessen Dampfleitung getrennt wird bzw. getrennt ist.

Wenn die Möglichkeit einer wahlweisen Bereitung warmen Milchschaums oder warmer Milch gewünscht wird, ist die Dampfgeneratorkoppelvorrichtung an einen externen Dampfgenerator bzw. eine Dampfauslassleitung anzuschließen, um gegebenenfalls die Dampfheizeinrichtung des Auslasses durch Dampfzufuhr zu aktivieren und damit den Milchschaum bzw. die Milch zu erwärmen, die dann aus dem Auslass abgegeben wird. Da die Erwärmung des Milchschaums bzw. der Milch erst in dem Auslass stattfindet, treten keine Wärmeverluste in der Auslassleitung ein. In der Vorrichtung ist somit zur Bereitung von warmem Milchschaum oder warmer Milch kein Dampferzeuger vorgesehen, vielmehr ist viel weniger aufwendig nur die Dampfgeneratorkoppelvorrichtung des Auslasses der Vorrichtung zur Ankopplung an den externen Dampfgenerator bzw. dessen Dampfauslassleitung vorhanden, die eine komplementäre Dampfgeneratorkoppelvorrichtung aufweist.

Mit anderen Worten, die Mittel zur Bereitung von warmem Milchschaum oder warmer Milch sind vollständig, wenn die Dampfgeneratorkoppelvorrichtung an einen externen Dampfgenerator unmittelbar oder mittelbar mit einem externen Dampfgenerator außerhalb der selbständig nutzbaren Vorrichtung gekoppelt ist. Zur Ausübung der Erwärmungsfunktion ist die Dampfgeneratorkoppelvorrichtung nicht mehr gesperrt, sondern offen.

Der Auslass bzw. dessen Dampfheizeinrichtung kann nach Anspruch 10 in unkomplizierter Weise als Mischer ausgebildet sein, in dem der eingespeiste kalte Milchschaum mit dem durch die Dampfgeneratorkoppelvorrichtung zugeführten Dampf gemischt wird und so das Gemisch direkt erwärmt wird.

Wenn jedoch der kalt zubereitete Milchschaum bzw. die kalte Milch nicht direkt mit dem heizenden Dampf in Berührung gelangen soll, um bei Erwärmung in seiner stofflichen Zusammensetzung möglichst unverändert zu bleiben, ist es statt der Ausbildung als Mischer auch möglich, gemäß Anspruch 11 die Dampfheizeinrichtung des Auslasses als einen mit dem extern erzeugten Dampf beheizten Wärmetauscher zu gestalten, der von dem kalt bereiteten Milchschaum bzw. der kalten Milch durchströmt wird.

Besonders vorteilhaft wird die separate Vorrichtung zur Bereitung von wahlweise kaltem oder warmem Milchschaum oder Abgabe wahlweise kalter oder warmer Milch in Verbindung mit einem Getränkezubereitungsgerät, insbesondere Kaffeegetränkezubereitungsgerät, nach Anspruch 12 eingesetzt, wobei die Dampfgeneratorkoppelvorrichtung des Auslasses der Vorrichtung zur Bereitung von wahlweise kaltem oder warmem Milchschaum oder Abgabe wahlweise kalter oder warmer Milch an eine mit einem Dampfventil versehene Dampfauslassleitung des Dampfgenerators des Getränkezubereitungsgeräts ankoppelbar ist. Wenn die Dampfgeneratorkoppelvorrichtung angekoppelt ist, kann der in dem Getränkezubereitungsgerät vorhandene Dampferzeuger auch zur Erzeugung warmem Milchschaums bzw. warmer Milch genutzt werden, wenn der Dampfgenerator eingeschaltet ist und das Dampfventil der Dampfauslassleitung, die an die Vorrichtung gekoppelt ist, gesteuert geöffnet wird.

Durch die Zufuhr des mit einem externen leistungsfähigen Dampferzeuger erzeugten Dampfs über die Dampfgeneratorkoppelvorrichtung in die Dampfheizeinrichtung des Auslasses der Vorrichtung zur Bereitung von wahlweise kaltem oder warmem Milchschaum oder wahlweise kalter oder warmer Milch kann der Auslass auch aus kalter Milch erzeugten Milchschaum oder kalte Milch, die zuvor gekühlt war, ausreichend erwärmen.

Um Milchschaum aus gekühlter Milch zu erzeugen oder gekühlte Milch abzugeben, umfasst die Vorrichtung ein Peltierelement und eine Milchbehälteraufnahmekammer, wobei die Milchbehälteraufnahmekammer und/oder der Milchbehälter, der in die Milchbehälteraufnahmekammer eingesetzt ist, mit der Kaltseite des Peltierelements wärmeleitend verbunden ist. Hierzu kann die Kaltseite des Peltierelements an einer Wand der Milchbehälteraufnahmekammer angeordnet sein oder zum gleichmäßigen Abkühlen mit einer planen Kaltseite zweckmäßig nach Anspruch 3 unter deren Boden angeordnet sein.

Um eine unerwünschte Erwärmung der Milch bereits in der Milchbehälteraufnahmekammer bzw. in einem von der Milchbehälteraufnahmekammer aufgenommenen Milchbehälter zu minimieren und aus hygienischen Gründen weist die Milchbehälteraufnahmekammer oder der Milchbehälter nach Anspruch 4 einen abnehmbaren Deckel mit einer in den Milchbehälter bzw. in die Milchbehälteraufnahmekammer ragenden Milchansaugleitung auf, die mit einer Ankoppelvorrichtung der Milchansaugleitung versehen ist. Zur weiteren Verarbeitung der kalten bzw. gekühlten Milch ist in der Vorrichtung eine Milchleitung, die zu dem Milchventilweg führt, mit einer komplementären Ankoppelvorrichtung versehen, die an die Ankoppelvorrichtung der Milchansaugleitung angekoppelt werden kann. Dabei bilden die Milchansaugleitung mit der Ankoppelvorrichtung sowie die komplementäre Ankoppelvorrichtung den Milcheinlass zu der Milchleitung.

In kompakter Ausbildung dieser Vorrichtung zur Bereitstellung von wahlweise kaltem oder warmem Milchschaum oder Abgabe wahlweise kalter oder warmer Milch weist diese eine Gehäuseeinheit mit der Milchbehälteraufnahmekammer und dem Peltierelement sowie eine Funktionseinheit auf, welche die Kaltschäumvorrichtung, den Milchventilweg und den Luftventilweg umfasst, wobei die Funktionseinheit in der Gehäuseeinheit im Wesentlichen horizontal so zu der Milchbehälteraufnahmekammer bzw. zu dem Milchbehälter und dem Deckel verschiebbar ist, dass die komplementäre Ankoppelvorrichtung der Milchleitung an die Ankoppelvorrichtung der Milchansaugleitung zuverlässig ankoppelbar ist. Die Funktionseinheit kann insbesondere manuell bedienungssicher verschoben werden. In der von der Milchbehälteraufnahmekammer bzw. dem Milchbehälter und dem Deckel entfernten Ausgangsstellung der Funktionseinheit kann der Deckel leicht abgenommen werden und der Milchbehälter aus der Milchbehälteraufnahmekammer entnommen werden.

Zur exakten Führung der verschiebbaren Funktionseinheit und Ankopplung an die Ankoppelvorrichtung der Milchansaugleitung ist die Funktionseinheit vorzugsweise nach Anspruch 2 in einer Schlittenführung der Gehäuseeinheit geführt.

In besonders kompakter Bauweise sind gemäß Anspruch 5 in der Funktionseinheit ein Mehrwegeventil, eine Pumpe sowie elektrische Antriebsorgane des Mehrwegeventils und der Pumpe angeordnet. Das Mehrwegeventil umfasst außer einem Mehrwegeventilausgang den Milchventilweg, den Luftventilweg und einen Spülflüssigkeitsventilweg, über den eine Spülmittelleitung auf den Mehrwegeventilausgang aufgeschaltet werden kann. Das Mehrwegeventil ist insbesondere so ausgebildet, dass es in einer ersten Stellung den Mehrwegeventilausgang mit dem Milcheingang verbindet oder in einer zweiten Stellung den Mehrwegeventilausgang mit dem Milcheingang und dem Lufteingang an einer Luftzuleitung verbindet, wodurch Luft mittels des durch die strömende Milch entstehenden Unterdrucks bzw. unter Einwirkung der Pumpe zur Milchschaumerzeugung der Milch zugesetzt wird. In einer dritten Stellung des Mehrwegeventils wird dessen Mehrwegeventilausgang mit einer Spülmittelleitung verbunden, wodurch Spülmittel bzw. Spülflüssigkeit der Pumpe, der Kaltschäumvorrichtung, der Auslassleitung und dem Auslass zugeführt wird, da die Pumpe und die Kaltschäumvorrichtung in der Funktionseinheit strömungsmäßig zwischen dem Mehrwegeventilausgang und der Ausgangsleitung angeordnet sind.

Weiterhin sind in der Funktionseinheit nach Anspruch 6 zweckmäßig interne Steuereinheiten der elektrischen Antriebsorgane des Mehrwegeventils und der Pumpe angeordnet.

Zur Stromversorgung der Funktionseinheit und des Peltierelements der Vorrichtung sind in der Gehäuseeinheit nach Anspruch 7 ein Stromversorgungsanschluss sowie ein durch die verschiebbare Funktionseinheit insbesondere über einen Stößel betätigbarer Startkontakt der Stromversorgung angeordnet, mit der die Stromversorgung bedienungssicher aktiviert werden kann. Die Antriebsorgane können ohne eine externe Steuerung manuell über eine Schaltvorrichtung angesteuert werden.

Es ist in Weiterbildung der internen Steuereinheiten auch möglich, dass diese nach Anspruch 8 eine Schnittstelle zum drahtlosen oder drahtgebundenen Anschluss an eine zentrale Steuereinheit aufweisen, um die Antriebsorgane des Mehrwegeventils und der Pumpe zentral, insbesondere mit einer Steuereinheit des Getränkezubereitungsgeräts nach Anspruch 13 zu steuern. Die zentrale Steuereinheit steuert zweckmäßig auch ein steuerbares Dampfventil in der Dampfauslassleitung des Dampfgenerators des Getränkezubereitungsgeräts oder den Dampfgenerator selbst, wobei die Dampfauslassleitung an die die Dampfgeneratorkoppelvorrichtung der Vorrichtung zur Bereitung von wahlweise kaltem oder warmem Milchschaum oder wahlweise kalter oder warmer Milch ankoppelbar ist. Bei angekoppelter Dampfgeneratorkoppelvorrichtung und geöffnetem Dampfventil wird der Dampfgenerator, an den die Dampfauslassleitung angeschlossen ist, in dem Getränkezubereitungsgerät zur Bereitung von warmem Milchschaum oder warmer Milch effizient genutzt.

Die Ankopplung der Dampfgeneratorkoppelvorrichtung an die Dampfauslassleitung des Getränkezubereitungsgeräts kann auch mittelbar über eine übliche Schäumvorrichtung des Getränkezubereitungsgeräts erfolgen.

Ein Ausführungsbeispiel der Erfindung wird im Folgenden anhand einer Zeichnung mit zwei Figuren erläutert, woraus die Merkmale der Erfindung erkennbar sind. Es zeigen jeweils in schematischer Darstellung:
- Fig.1: eine Vorrichtung zur Bereitung von wahlweise kaltem oder warmem Milchschaum oder Abgabe wahlweise kalter oder warmer Milch in einem von einem Getränkezubereitungsgerät fluidmäßig und steuerungsmäßig getrennten Zustand und vor Betriebsbereitschaft, und
- Fig.2: die Vorrichtung gemäß Fig. 1, jedoch in einem mit dem Getränkezubereitungsgerät fluidmäßig und steuerungsmäßig verbundenen Zustand und in Betriebsbereitschaft.

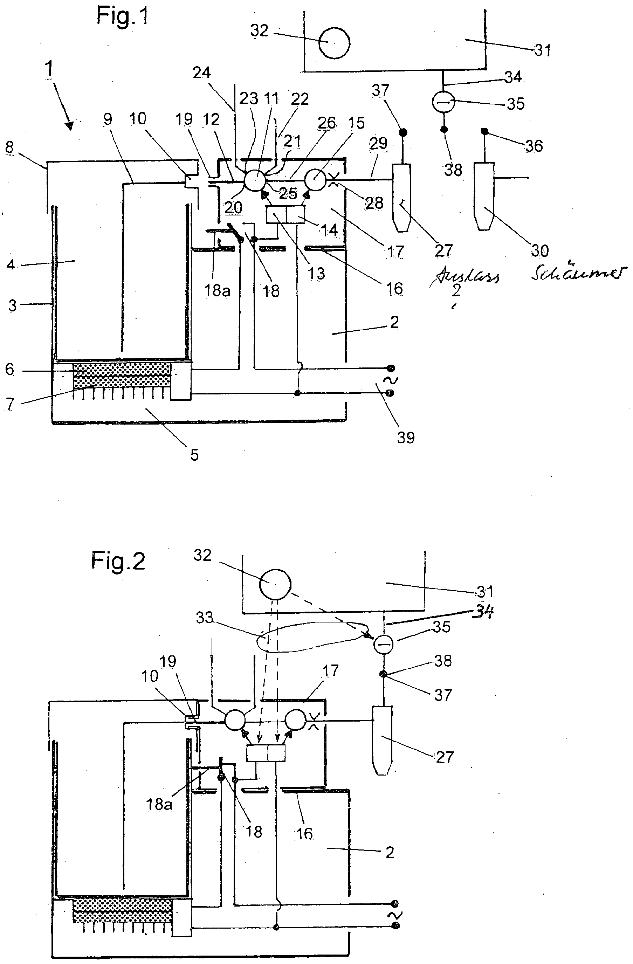

In Fig. 1 ist die Vorrichtung zur Bereitung von wahlweise kaltem oder warmem Milchschaum oder Abgabe wahlweise kalter oder warmer Milch allgemein mit 1 bezeichnet. Sie umfasst eine Gehäuseeinheit 2 mit einer Milchbehälteraufnahmekammer 3, in die ein Milchbehälter 4 eingesetzt ist, mit einem abnehmbaren Deckel 8, von dem eine Milchansaugleitung 9 in den Bodenbereich der Milchbehälteraufnahmekammer 3 bzw. einen Milchbehälter 4 in der Milchbehälteraufnahmekammer 3 herabreicht. An einer Seite des Deckels 8 ist die Milchansaugleitung 9 mit einer von außen zugänglichen Ankoppelvorrichtung 10 versehen.

Die Vorrichtung umfasst weiterhin eine Funktionseinheit 17, die in einer Schlittenführung 16 der Gehäuseeinheit 2 horizontal verschiebbar ist. Die Funktionseinheit ist neben der Milchbehälteraufnahmekammer in der Gehäuseeinheit 2 angeordnet und so verschiebbar, dass sie von der Milchbehälteraufnahmekammer 3 getrennt bzw. gelöst sein kann, wie in Fig. 1 dargestellt, oder auf die Milchbehälteraufnahmekammer 3 seitlich aufgeschoben werden kann, wie in Fig. 2 gezeigt.

Die Funktionseinheit beinhaltet ein Mehrwegeventil 11, eine Pumpe 15, nicht bezeichnete elektrische Antriebsorgane des Mehrwegeventils 11 und der Pumpe 15, sowie interne Steuereinheiten 13 bzw. 14 des Mehrwegeventils 11 und der Pumpe 15, mit denen sie einstellbar bzw. einschaltbar sind. Auf der der Milchbehälteraufnahmekammer 3 zugewandten Seite weist die Funktionseinheit 17 eine komplementäre Ankoppelvorrichtung 19 auf, die geeignet ist, in einem an die Ankoppelvorrichtung 10 gekoppelten Zustand, siehe Fig. 2, die Milchansaugleitung 9 in dem Milchbehälter 4 bzw. in der Milchbehälteraufnahmekammer 3 mit einer Milchleitung 12 in der Funktionseinheit zu verbinden. Milch kann aus dem Milchbehälter 4 bzw. der mit dem Deckel 8 verschlossenen Milchbehälteraufnahmekammer 3 über die an einem seitlichen Ende der Milchansaugleitung 9 angeordneten Ankoppelvorrichtung 10 und die mit dieser gekoppelte komplementäre Ankoppelvorrichtung 19 in die Milchleitung 12 der Funktionseinheit und über die Milchleitung 12 in einen Milcheingang des Mehrwegeventils 11 eingeleitet werden, wenn die Funktionseinheit 17 an die Milchbehälteraufnahmekammer 3 geschoben ist.

Insbesondere zur Kaltmilchbereitung oder Bereitung kalten Milchschaums mit der Vorrichtung ist ein nicht bezeichneter Boden der Milchbehälteraufnahmekammer 3 mit der Kaltseite eines Peltierelements 5 wärmeleitend verbunden. Mit dem Peltierelement 5 kann in einem Kühlschrank vorgekühlte Milch in dem in die Aufnahmekammer einsetzbaren Milchbehälter zusätzlich gekühlt werden.

Zur Stromversorgung des Peltierelements 5 weist die Gehäuseeinheit 2 einen Stromversorgungsanschluss 39 auf, der auch interne Steuereinheiten 13, 14 für Antriebsorgane des Mehrwegeventils 11 und der Pumpe 15 mit Strom versorgt. Die Stromversorgung des Peltierelements 5 erfolgt nur in einem an die Milchbehälteraufnahmekammer 3 geschobenen Zustand der Funktionseinheit 17, indem ein Startkontakt 18 mittels eines Stößels 18a geschlossen ist, siehe Fig. 2.

In der verschiebbaren Funktionseinheit 17 sind außer dem Mehrwegeventil 11, welches ein Dreiwegeventil ist, und der Milchleitung 12 zwischen der komplementären Ankoppelvorrichtung 19 und dem Milcheingang 20 des Dreiwegeventils eine Luftleitung 22, eine Spülmittelleitung 24 und eine Mehrwegeventilausgangsleitung 26 angeordnet, die zu einem Eingang der als Saugpumpe ausgebildeten Pumpe 15 führt, deren Ausgang über eine Drossel 28 mit der Ausgangsleitung 29 verbunden ist. Die Drossel 28 hat eine Funktion zur Kaltmilchschaumbereitung, wenn ihr von dem Mehrwegeventil 11 über die Pumpe 15 mit Luft durchsetzte Milch zugeführt wird. An einem Ausgang der Drossel 28 ist eine Auslassleitung 29 angeschlossen, die zu einem Auslass 27 außerhalb der Funktionseinheit 17 führt.

Der Auslass 27 weist eine mit einer Dampfheizeinrichtung des Auslasses 27 verbundene Dampfgeneratorkoppelvorrichtung 37 auf, die mit einer komplementären Dampfgeneratorkoppelvorrichtung 38 koppelbar ist, die über ein Dampfventil 35 von einer Dampfauslassleitung 34 mit Dampf beaufschlagt werden kann, siehe Fig. 2.

Der Auslass 27 dient in der Konfiguration der Vorrichtung gemäß Figur 1, in der an die Dampfgeneratorkoppelvorrichtung 37 keine externe Dampfauslassleitung angekoppelt ist und die Dampfgeneratorkoppelvorrichtung abgesperrt ist, als Ausgabevorrichtung für kalte Milch oder kalten Milchschaum.

Wenn hingegen gemäß Fig. 2 die Dampfgeneratorkoppelvorrichtung 37 an die komplementäre Dampfgeneratorkoppelvorrichtung 38 angekoppelt ist, selbst geöffnet ist und über das geöffnete Dampfventil 35 mit der Dampfauslassleitung 34 dampfleitend verbunden ist, kann der in dem Dampfgenerator des Getränkezubereitungsgeräts 31 erzeugte Heißdampf in den Auslass 27 mit der Dampfheizeinrichtung strömenden kalten Milchschaum, der in der Funktionseinheit 17 bereitet wurde, oder kalte Milch wirkungsvoll direkt oder indirekt erwärmen. Zur Abgabe von kaltem Milchschaum oder kalter Milch aus dem Auslass 27 ist das Dampfventil 35 geschlossen.

Zweckmäßig werden das Dampfventil 35 in der Dampfauslassleitung 34 und die Steuereinheiten 13, 14 des Mehrwegeventils 11 und der Pumpe 15 von einer zentralen Steuereinheit 32 des Getränkezubereitungsgeräts über Steuerverbindungen 33 angesteuert, die durch Leitungen oder drahtlos realisiert sein können und in Fig. 2 mit unterbrochenen Linien angedeutet sind. Hierzu können die internen Steuereinheiten 13, 14 eine Schnittstelle aufweisen, über die sie über die Steuerverbindungen 33 mit der externen Steuereinheit 32 kommunizieren.

Das ebenfalls von der zentralen Steuereinheit 32 steuerbare Mehrwegeventil 11 in der Funktionseinheit 17 weist außer dem Milcheingang 20 einen Lufteingang 21 mit der Luftleitung 22 und einen Spülmitteleingang 23 mit der Spülmittelleitung 24 auf, die zu einem nicht dargestellten Spülmittelbehälter führt.

Zur Inbetriebnahme der Vorrichtung wird nach Einsetzen des Milchbehälters 4 in die Milchbehälteraufnahmekammer 3 und Verschließen mit dem Deckel 8 die Funktionseinheit 17 in der Schlittenführung 16 so zu der Milchbehälteraufnahmekammer 3 hin an den Milchbehälterdeckel 8 verschoben, dass die zu dem Mehrwegeventil 11 führende Milchleitung 12 mittels ihrer komplementären Ankoppelvorrichtung 19 an die Ankoppelvorrichtung 10 der Milchansaugleitung 9 des Behälterdeckels 8 ankoppelt und der Startkontakt 18 mittels des an die Milchbehälteraufnahmekammer 3 fahrenden Stößels 18a, geschlossen wird.

Wenn dann das Mehrwegeventil 11 durch seine Steuereinheit 13 und sein Antriebsorgan in seine erste Stellung gestellt ist, steht der Milcheingang 20 mit dem Mehrwegeventilausgang 25 in Verbindung, wobei der Lufteingang 21 und der Spülmitteleingang 23 gesperrt sind. Die von der Pumpe 15 angesaugte Milch wird aus dem Mehrwegeventilausgang 25 und einen Milchventilweg des Mehrwegeventils 11 gesaugt und dem Auslass 27 als pure Milch zugeführt.

Wenn hingegen das Mehrwegeventil 11 durch seine Steuereinheit 13 gesteuert durch sein Antriebsorgan in eine zweite Stellung eingestellt ist, bleibt der Milcheingang 20 mit dem Mehrwegeventilausgang 25 *verbunden und der Lufteingang 21 ist geöffnet, der mit dem Milchventilweg, auch als Milchströmungspfad bezeichnet, in Verbindung steht. Dadurch wird außer der durch die Pumpe 15 angesaugten Milch in dem Mehrwegeventil 11 auch Luft angesaugt und der Milch beigemengt. Das entstehende Milch-Luftgemisch wird von der Pumpe 15 weiter durch die zwischen dem Mehrwegeventilausgang 25 und dem Auslass 27 angeordnete Drossel 28 gepumpt, die in dem vorliegenden Ausführungsbeispiel stromabwärts der Pumpe 15 angeordnet ist. Das in der Drossel 28 komprimierte Milch-Luftgemisch expandiert stromabwärts der Drossel und Milchschaum wird dem Auslass 27 durch die Auslassleitung 29 zugeführt.

In einer dritten durch die Steuereinheit 13 und das Antriebsorgan des Mehrwegeventils 11 gesteuerten Stellung sind der Milcheingang 20 und der Lufteingang 21 gesperrt, während der Spülmitteleingang 24 geöffnet ist und die Spülmittelleitung 24 über einen Spülflüssigkeitsventilweg auf den Mehrwegeventilausgang 25 aufgeschaltet ist. In diesem Fall saugt die Pumpe 15 Spülflüssigkeit durch das Mehrwegeventil 11 und fördert die Spülflüssigkeit durch die Mehrwegeventilausgangsleitung 26, die Pumpe 15 und die Auslassleitung 29 zu dem Auslass 27.

Die Ventilstellungen des Mehrwegeventils 11 und der Betrieb der Pumpe 15 können in einer Variante der Vorrichtung 1 zur Bereitung von Milchschaum auch unabhängig von einem Getränkezubereitungsgerät mittels der internen Steuereinheiten 13, 14 für das Mehrwegeventil 11 und die Pumpe 15 über eine nicht dargestellte Schaltanordnung manuell angewählt werden.

Wie in Fig. 1 dargestellt, braucht der Auslass 27 der Vorrichtung 1 zur Kaltschaumbereitung bzw. Abgabe kalter Milch mit keiner externen Dampfauslassleitung 34 bzw. keinem Dampfgenerator verbunden zu sein. Sie kann aber, wie in Fig. 2 dargestellt, auch zur Kaltschaumbereitung bzw. Abgabe kalter Milch an die Dampfauslassleitung 34 angeschlossen bleiben, wenn das Dampfauslassventil 35 durch die zentrale Steuereinheit 32 geschlossen ist bzw. der Dampfgenerator inaktiv ist.

Zur Zubereitung warmen Milchschaums bzw. warmer Milch muss hingegen der Auslass 27 über dessen Dampfgeneratorkoppelvorrichtung 37 an eine Dampfauslassleitung z.B. 34 bzw. einen Dampfgenerator funktionell angekoppelt sein, so dass in dem vorliegenden Beispiel von der Dampfauslassleitung 34 Dampf über das gesteuerte Dampfauslassventil 35 in den Auslass 27 eingespeist wird.

In Fig. 1 ist angedeutet, dass der Auslass 27 der Vorrichtung 1 mit seiner Dampfgeneratorkoppelvorrichtung 37 an die komplementäre Dampfgeneratorkoppelvorrichtung 38 des Getränkezubereitungsgeräts 31 im Austausch zu einem konventionellen Schäumer 30 angekoppelt werden kann, der eine Dampfgeneratorkoppelvorrichtung 36 und eine nicht bezeichnete Schäumer-Milchleitung aufweist und ausschließlich heißen Milchschaum abgeben kann.

### Bezugszeichenliste

- 1: Vorrichtung zur Bereitung von Milchschaum
- 2: Gehäuseeinheit
- 3: Milchbehälteraufnahmekammer
- 4: Milchbehälter
- 5: Peltierelement
- 6: Peltierelement-Kaltseite
- 7: Peltierelement-Warmseite
- 8: Deckel
- 9: Milchansaugleitung
- 10: Ankoppelvorrichtung
- 11: Mehrwegeventil
- 12: Milchleitung
- 13: Steuereinheit Mehrwegeventil
- 14: Steuereinheit Pumpe
- 15: Pumpe
- 16: Schlittenführung
- 17: Funktionseinheit
- 18: Startkontakt
- 18a: Stößel
- 19: komplementäre Ankoppelvorrichtung
- 20: Milcheingang
- 21: Lufteingang
- 22: Luftleitung
- 23: Spülmitteleingang
- 24: Spülmittelleitung
- 25: Mehrwegeventilausgang
- 26: Mehrwegeventilausgangsleitung
- 27: Auslass
- 28: Drossel
- 29: Auslassleitung
- 30: Schäumer
- 31: Getränkezubereitungsgerät
- 32: zentrale Steuereinheit
- 33: Steuerverbindungen
- 34: Dampfauslassleitung
- 35: Dampfventil
- 36: Dampfgeneratorkoppelvorrichtung
- 37: Dampfgeneratorkoppelvorrichtung
- 38: komplementäre Dampfgeneratorkoppelvorrichtung
- 39: Stromversorgungsanschluss

## Patentansprüche

1. Vorrichtung zur Bereitung von wahlweise kaltem oder warmem Milchschaum oder Abgabe wahlweise kalter oder warmer Milch (1), umfassend
einen Milchbehälter (4),
einen Milcheinlass (9, 10, 19), welcher den Milchbehälter (4) über einen Milchventilweg mit einer über einen Luftventilweg aktivierbaren Kaltschäumvorrichtung verbindet,
eine stromabwärts der Kaltschäumvorrichtung angeordnete Auslassleitung (29) mit einem Auslass (27) sowie gegebenenfalls wahlweise aktivierbare Mittel zum Erwärmen des in der Kaltschäumvorrichtung bereiteten Milchschaums bzw. der die Kaltschäumvorrichtung durchströmenden Milch,
wobei der Auslass (27) eine Dampfheizeinrichtung mit einer absperrbaren Dampfgeneratorkoppelvorrichtung (37) umfasst, mit denen der Auslass (27) geeignet ist, in der Kaltschäumvorrichtung bereiteten kalten Milchschaum bzw. aus dieser strömende Milch zu erwärmen,
wobei die Vorrichtung ein Peltierelement (5) und eine Milchbehälteraufnahmekammer (3) umfasst,
wobei die Milchbehälteraufnahmekammer (3) und/oder der Milchbehälter (4) mit der Kaltseite (6) des Peltierelements (5) wärmeleitend verbunden ist und
wobei die Vorrichtung (1) eine Gehäuseeinheit (2) mit der Milchbehälteraufnahmekammer (3) und dem Peltierelement (5) sowie eine Funktionseinheit (17) umfasst, welche den Milchventilweg, den Luftventilweg und die Kaltschäumvorrichtung aufweist und
wobei die Funktionseinheit (17) in der Gehäuseeinheit (2) im Wesentlichen horizontal so verschiebbar ist, dass die komplementäre Ankoppelvorrichtung (19) der Milchleitung an die Ankoppelvorrichtung (10) der Milchansaugleitung (9) koppelbar ist.

2. Vorrichtung nach Anspruch 1,
**dadurch gekennzeichnet,**
**dass** die verschiebbare Funktionseinheit (17) in einer Schlittenführung (16) der Gehäuseeinheit (2) geführt ist.

3. Vorrichtung nach Anspruch 1,
dass das Peltierelement (5) unter einem Boden der Milchbehälteraufnahmekammer (3) angeordnet ist.

4. Vorrichtung nach Anspruch 1 oder 3,
**dadurch gekennzeichnet,**
**dass** die Milchbehälteraufnahmekammer (3) oder der Milchbehälter (4) einen abnehmbaren Deckel (8) mit einer in den Milchbehälter (4) bzw. in die Milchbehälteraufnahmekammer (3) ragenden Milchansaugleitung (9) und mit einer Ankoppelvorrichtung (10) der Milchansaugleitung (9) aufweist und
**dass** eine Milchleitung (12), die zu dem Milchventilweg führt, mit einer komplementären Ankoppelvorrichtung (19) versehen ist, die an die Ankoppelvorrichtung (10) der Milchansaugleitung (9) ankoppelbar ist, wobei die Milchansaugleitung (9) mit der Ankoppelvorrichtung (10) sowie die komplementäre Ankoppelvorrichtung (19) den Milcheinlass zu der Milchleitung (12) bilden.

5. Vorrichtung nach Anspruch 1,
**dadurch gekennzeichnet,**
**dass** in der Funktionseinheit (17) ein Mehrwegeventil (11) angeordnet ist, welches einen Mehrwegeventilausgang (25), den Milchventilweg, den Luftventilweg und einen Spülflüssigkeitsventilweg umfasst, über den eine Spülmittelleitung (24) auf den Mehrwegeventilausgang (25) aufschaltbar ist,
**dass** in der Funktionseinheit (17) eine Pumpe (15) und die Kaltschäumvorrichtung strömungsmäßig zwischen dem Mehrwegeventilausgang (25) und der Auslassleitung (29) angeordnet sind und
**dass** in der Funktionseinheit (17) elektrische Antriebsorgane des Mehrwegeventils (11) und der Pumpe (15) angeordnet sind.

6. Vorrichtung nach Anspruch 5,
**dadurch gekennzeichnet,**
**dass** in der Funktionseinheit (17) interne Steuereinheiten (13, 14) der elektrischen Antriebsorgane des Mehrwegeventils (11) und der Pumpe (15) angeordnet sind.

7. Vorrichtung nach Anspruch 5,
**dadurch gekennzeichnet,**
**dass** in der Gehäuseeinheit (2) ein Stromversorgungsanschluss (39) sowie ein durch die verschiebbare Funktionseinheit (17) betätigbarer Startkontakt (18) angeordnet sind, mit dem eine Stromversorgung der Funktionseinheit (17) und des Peltierelements (5) aktivierbar ist.

8. Vorrichtung nach Anspruch 7,
**dadurch gekennzeichnet,**
**dass** die internen Steuereinheiten (13, 14) eine Schnittstelle zum drahtlosen oder drahtgebundenen Anschluss an eine zentrale Steuereinheit (32) aufweisen.

9. Vorrichtung nach Anspruch 1,
**dadurch gekennzeichnet,**
**dass** die Dampfgeneratorkoppelvorrichtung (37) im ungekoppelten Zustand selbsttätig absperrbar ausgebildet ist.

10. Vorrichtung nach Anspruch 1,
**dadurch gekennzeichnet,**
**dass** der Auslass (27) als Dampfheizeinrichtung eine Mischvorrichtung des in der Kaltschäumvorrichtung bereiteten Milchschaums bzw. der Milch mit Dampf aufweist.

11. Vorrichtung nach Anspruch 1 oder 2,
**dadurch gekennzeichnet,**
**dass** der Auslass (27) als Dampfheizeinrichtung einen mit Dampf beheizten Wärmetauscher aufweist.

12. Getränkezubereitungsgerät, insbesondere Kaffeegetränkezubereitungsgerät, mit einem Dampfgenerator und mit einer Vorrichtung (1) zur Bereitung von wahlweise kaltem oder warmem Milchschaum oder wahlweise kalter oder warmer Milch nach Anspruch 1 oder 9,
**dadurch gekennzeichnet,**
**dass** die Dampfgeneratorkoppelvorrichtung (37) der Vorrichtung (1) an eine mit einem steuerbaren Dampfventil (35) versehene Dampfauslassleitung (34) des Dampfgenerators ankoppelbar ist.

13. Getränkezubereitungsgerät nach Anspruch 12 mit einer Vorrichtung nach Anspruch 8,
**dadurch gekennzeichnet,**
**dass** die zentrale Steuereinheit (32) Bestandteil des Getränkezubereitungsgeräts (31) ist und
**dass** an die zentrale Steuereinheit (32) ein Betätigungsorgan des Dampfventils (35) angeschlossen ist.

## Claims

1. Device for preparing cold or hot milk froth or for dispensing cold or hot milk (1), comprising
a milk container (4),
a milk intake (9, 10, 19), which connects the milk container (4) via a milk valve path to a cold frothing device which can be activated via an air valve path, an outlet line (29) arranged downstream of the cold frothing device having an outlet (27) and optional means which can be optionally activated to heat the milk froth prepared in the cold frothing device or the milk flowing through the cold frothing device,
wherein the outlet (27) comprises a steam heating device having an isolatable steam generator coupling device (37) with which the outlet (27) is suitable for heating cold milk froth prepared in the cold frothing device or milk flowing from said cold frothing device, wherein the device comprises a Peltier element (5) and a milk container receiving chamber (3),
wherein the milk container receiving chamber (3) and/or the milk container (4) is connected to the cold side (6) of the Peltier element (5) in a heat-conducting manner, and
wherein the device (1) comprises a housing unit (2) with the milk container receiving chamber (3) and the Peltier element (5), as well as a functional unit (17) which has the milk valve path, the air valve path and the cold frothing device, and
wherein the functional unit (17) can be moved substantival horizontally in the housing unit (2), such that the complementary coupling device (19) of the milk line can be coupled to the coupling device (10) of the milk suction line (9).

2. Device according to claim 1,
**characterised in that**
the movable functional unit (17) is guided in a carriage guide (16) of the housing unit (2).

3. Device according to claim 1,
**characterised in that**
the Peltier element (5) is arranged under a floor of the milk container receiving chamber (3).

4. Device according to either claim 1 or claim 3,
**characterised in that**
the milk container receiving chamber (3) or the milk container (4) has a removable lid (8) having a milk suction line (9) projecting into the milk container (4) or into the milk container receiving chamber (3), and having a coupling device (10) of the milk suction line (9), and **in that** a milk line (12) which leads to the milk valve path is provided with a complementary coupling device (19) which can be coupled to the coupling device (10) of the milk suction line (9), wherein the milk suction line (9) with the coupling device (10) together with the complementary coupling device (19) form the milk intake to the milk line (12).

5. Device according to claim 1,
**characterised in that**
a multi-directional valve (11) is arranged in the functional unit (17), which valve comprises a multi-directional valve outlet (25), the milk valve path, the air valve path and a rinsing fluid valve path, via which a rinsing agent line (24) can be connected onto the multi-directional valve outlet (25),
**in that** a pump (15) and the cold frothing device are arranged in the functional unit (17), in terms of flow, between the multi-directional valve outlet (25) and the outlet line (29), and **in that** electric drive elements of the multi-directional valve (11) and the pump (15) are arranged in the functional unit (17).

6. Device according to claim 5,
**characterised in that**
internal control units (13, 14) of the electric drive elements of the multi-directional valve (11) and the pump (15) are arranged in the functional unit (17).

7. Device according to claim 5,
**characterised in that**
a power supply connection (39), together with a start contact (18) which can be operated by the movable functional unit (17) are arranged in the housing unit (2), with which start contact a power supply of the functional unit (17) and the Peltier element (5) can be activated.

8. Device according to claim 7,
**characterised in that**
the internal control units (13, 14) have an interface for wireless or wired connection to a central control unit (32).

9. Device according to claim 1,
**characterised in that**
the steam generator coupling device (37) is configured in the uncoupled state such that it can be automatically isolated.

10. Device according to claim 1,
**characterised in that**
as a steam heating device, the outlet (27) has a mixing device for mixing the milk froth prepared in the cold frothing device or the milk with steam.

11. Device according to either claim 1 or claim 2,
**characterised in that**
as a steam heating device, the outlet (27) has a heat exchanger heated with steam.

12. Beverage preparation device, in particular coffee beverage preparation device, having a steam generator and a device (1) for preparing either cold or hot milk froth, or either cold or hot milk, according to either claim 1 or claim 9,
**characterised in that**
the steam generator coupling device (37) of the device (1) can be coupled to a steam outlet line (34) of the steam generator provided with a controllable steam valve (35).

13. Beverage preparation device according to claim 12 having a device according to claim 8,
**characterised in that**
the central control unit (32) is part of the beverage preparation device (31), and
an actuating member of the steam valve (35) is connected to the central control unit (32).

## Revendications

1. Dispositif pour la préparation, au choix, d'une mousse de lait froide ou chaude ou pour la distribution, au choix, de lait (1) froid ou chaud, le dispositif comprenant
un récipient de lait (4),
une entrée de lait (9, 10, 19), laquelle relie le récipient de lait (4) avec un dispositif pour la préparation de la mousse froide pouvant être actionné par une voie de soupape de lait avec une voie de soupape d'air,
une conduite de sortie (29) disposée en aval du dispositif pour la préparation de la mousse froide avec une sortie (27) ainsi qu'éventuellement des moyens pouvant être actionnés au choix pour le chauffage de la mousse de lait préparée dans le dispositif pour la préparation de la mousse froide, respectivement du lait passant par le dispositif pour la préparation de mousse froide,
la sortie (27) comprenant un dispositif de chauffage à la vapeur avec un dispositif de couplage de générateur de vapeur (37) pouvant être verrouillé, avec lesquels la sortie (27) est appropriée pour chauffer la mousse de lait froide préparée dans le dispositif pour la préparation de la mousse froide, respectivement, le lait en sortant, le dispositif comprenant un élément de Peltier (5) et une chambre de réception de lait (3),
la chambre de réception de lait (3) et/ou le récipient de lait (4) étant relié en conduisant la chaleur avec la face froide (6) de l'élément de Peltier (5) et
le dispositif (1) comprenant une unité de boîtier (2) avec la chambre de réception de lait (3) et l'élément de Peltier (5), ainsi qu'une unité fonctionnelle (17), laquelle présente la voie de soupape de lait, la voie de soupape d'air et
le dispositif pour la préparation de la mousse froide, et
l'unité fonctionnelle (17) pouvant être déplacée sensiblement de manière horizontale dans l'unité de boîtier (2), de sorte que le dispositif de couplage complémentaire (19) de la conduite de lait peut être couplé sur le dispositif de couplage (10) de la conduite d'aspiration de lait (9).

2. Dispositif selon la revendication 1,
**caractérisé en ce**
**que** l'unité fonctionnelle (17) mobile est guidée dans un guidage de chariot (16) de l'unité de boîtier (2).

3. Dispositif selon la revendication 1,
**caractérisé en ce**
**que** l'élément de Peltier (5) est disposé en dessous du fond de la chambre de réception de lait (3).

4. Dispositif selon la revendication 1, ou 3,
**caractérisé en ce**
**que** la chambre de réception de lait (3) ou le récipient de lait (4) présentent un couvercle (8) amovible avec une conduite d'aspiration de lait (9) pénétrant dans le récipient de lait (4), respectivement dans la chambre de réception de lait (3), et avec un dispositif de couplage (10) de la conduite d'aspiration de lait (9), et
**qu'**une conduite de lait (12), qui mène vers la voie de soupape de lait, est munie d'un dispositif de couplage complémentaire (19), qui peut se coupler sur le dispositif de couplage (10) de la conduite d'aspiration de lait (9), où la conduite d'aspiration de lait (9) forme, avec le dispositif de couplage (10) ainsi qu'avec le dispositif de couplage complémentaire (19), l'entrée de lait vers la conduite de lait (12).

5. Dispositif selon la revendication 1,
**caractérisé en ce**
**que**, dans l'unité fonctionnelle (17), une vanne à plusieurs voies (11) est disposée, comprenant une sortie de vanne à plusieurs voies (25), la voie de soupape de lait, la voie de soupape d'air et une voie de soupape de liquide de rinçage, par l'intermédiaire de laquelle une conduite de produit de rinçage (24) peut être branchée sur la sortie de la vanne à plusieurs voies (25), que, dans l'unité fonctionnelle (17), une pompe (15) et le dispositif pour la préparation de la mousse froide sont disposés en communication fluide entre la sortie de vanne à plusieurs voies (25) et la conduite de sortie (29), et que, dans l'unité fonctionnelle (17), des organes d'entraînement électriques de la vanne à plusieurs voies (11) et de la pompe (15) sont disposés.

6. Dispositif selon la revendication 5,
**caractérisé en ce**
**que**, dans l'unité fonctionnelle (17), des unités de commande internes (13, 14) des organes d'entraînement électriques de la vanne à plusieurs voies (11) et de la pompe (15) sont disposés.

7. Dispositif selon la revendication 5,
**caractérisé en ce**
**que**, dans l'unité de boîtier (2), un branchement pour l'alimentation électrique (39) ainsi qu'un contact de démarrage (18) pouvant être actionné par l'unité fonctionnelle (17) mobile sont disposés, avec lequel une alimentation en courant de l'unité fonctionnelle (17) et de l'élément de Peltier (5) peut être activée.

8. Dispositif selon la revendication 7,
**caractérisé en ce**
**que** les unités de commandes internes (13, 14) présentent une interface pour le raccordement sans fil ou par une liaison par fil sur une unité de commande centrale (32).

9. Dispositif selon la revendication 1,
**caractérisé en ce**
**que** le dispositif de couplage de générateur de vapeur (37) est conçu pour être verrouillable automatiquement à l'état non couplé.

10. Dispositif selon la revendication 1,
**caractérisé en ce**
**que** la sortie (27) présente un dispositif de mélange de la mousse de lait préparée dans le dispositif pour la préparation de la mousse froide, respectivement du lait, avec de la vapeur sous la forme d'un dispositif de chauffage à la vapeur.

11. Dispositif selon la revendication 1 ou 2,
**caractérisé en ce**
**que** la sortie (27) présente un échangeur de chaleur chauffé avec de la vapeur en tant que dispositif de chauffage à la vapeur.

12. Appareil de préparation de boissons, notamment appareil de préparation de boissons à base de café, avec un générateur de vapeur et avec un dispositif (1) pour la préparation, au choix, de mousse de lait froide ou chaude, ou, au choix, de lait froid ou chaud selon la revendication 1 ou 9,
**caractérisé en ce**
**que** le dispositif de couplage du générateur de vapeur (37) du dispositif (1) peut être couplé à une conduite de sortie de vapeur (34) du générateur de vapeur munie d'une soupape à vapeur (35) pouvant être commandée.

13. Appareil de préparation de boissons selon la revendication 12, avec un dispositif selon la revendication 8,
**caractérisé en ce**
**que** l'unité de commande centrale (32) est une composante de l'appareil de préparation de boissons (31), et
**qu'**un organe d'actionnement de la soupape à vapeur (35) est raccordé à l'unité de commande centrale (32)
